(19) Europäisches Patentamt
European Patent Office
Office européen des brevets

(11) **EP 2 532 166 B1**

(12) **EUROPEAN PATENT SPECIFICATION**

(45) Date of publication and mention of the grant of the patent:
**19.07.2017 Bulletin 2017/29**

(21) Application number: **10848802.4**

(22) Date of filing: **01.04.2010**

(51) Int Cl.:
*H04N 13/00* (2006.01)          *G03B 35/08* (2006.01)
*G06T 7/00* (2017.01)

(86) International application number:
**PCT/IB2010/051442**

(87) International publication number:
**WO 2011/121397 (06.10.2011 Gazette 2011/40)**

(54) **METHOD, APPARATUS AND COMPUTER PROGRAM FOR SELECTING A STEREOSCOPIC IMAGING VIEWPOINT PAIR**

VERFAHREN, VORRICHTUNG UND COMPUTERPROGRAMM ZUR AUSWAHL EINES BLICKPUNKTPAARES IN DER STEREOSKOPISCHEN BILDGEBUNG

PROCÉDÉ, APPAREIL ET PROGRAMME D'ORDINATEUR PERMETTANT LA SÉLECTION D'UNE PAIRE DE POINTS DE VUE POUR IMAGERIE STÉRÉOSCOPIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.12.2012 Bulletin 2012/50**

(73) Proprietor: **Nokia Technologies Oy
02610 Espoo (FI)**

(72) Inventor: **POCKETT, Lachlan
FI-33720 Tampere (FI)**

(74) Representative: **Higgin, Paul
Swindell & Pearson Limited
48 Friar Gate
Derby DE1 1GY (GB)**

(56) References cited:
**EP-A2- 1 085 769      EP-A2- 1 089 573
EP-A2- 2 315 452      WO-A1-2007/057497
JP-A- 2008 172 342      US-A1- 2007 047 040
US-A1- 2009 096 863      US-A1- 2009 142 041**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

Embodiments of the present invention relate to methods, apparatuses, computer programs and computer readable storage media. In particular, embodiments relate to methods, apparatuses, computer programs and computer readable storage media in the field of stereoscopic imaging.

BACKGROUND TO THE INVENTION

Current stereoscopic systems, using a pair of cameras with a fixed separation distance, are typically designed to take an image from each camera. A stereoscopic image is generated from the two images for display on a specific stereoscopic display. Such systems are limited to taking stereoscopic images of a pre-specified scene environment for display on a pre-specified display. Accordingly, there are compatibility issues when viewing the stereoscopic images with displays other than the pre-specified display.

JP 2008-172342 discloses a system which seeks to allow images suited to three-dimensional display to be automatically slected by recording coordinate information which will be a reference when selecting two images to be used in the case of three-dimensional display. A CPU determines a combination of single viewpoint images in which a parallax converted into the number of pixels is within a target pixel range suitable to appreciation of a three-dimensional image in a three-dimensional display device. Information showing the combination of single viewpoint images where the parallax is within the target pixel range is recorded to a recording medium as three-dimensional display information.

US 2009/0142041 A1 discloses providing a stereoscopic video recording method, a stereoscopic video recording medium, a stereoscopic video reproducing method, a stereoscopic video recording apparatus, and a stereoscopic video reproducing apparatus that are capable of more optimally performing recording and reproduction of stereoscopic video. According to one example, a stereoscopic video recording method records, in a recording medium, stereoscopic video including left-eye images and right-eye images utilising parallax information, by using a stereoscopic video recording apparatus. From video content that contains stereoscopic images, the method grasps the amount of variation in parallactic angle having a given or larger value, a variation time that the variation in parallactic angle takes, and the number of times that the variation in parallactic angle occurs. The method then calculates an evaluation value that corresponds to the degree of eye fatigue on the basis of the amount variation, the variation time, and the number of times of the variation, encodes the video content in such a manner that the evaluation value is within a given range, and records the encoded video content in the recording medium.

EP 2 315 452 A2 discloses an image processing apparatus including a controller that selects, from multiple images photographed from different viewpoints, a set of images for three-dimensional image display. The controller determines whether or not amount-of-movement information corresponding to a parallax between the images is recorded as attribute information of the images. When the amount-of-movement information is recorded, the controller selects a combination of images having a parallax corresponding to a display size of a display section by using the recorded amount-of-movement information. When the amount-of-movement information is not recorded, the controller selects a combination of images having a parallax corresponding to the display size by determining an amount of movement through use of information resulting from determination of degrees of block matching between images divided into blocks and using information of the determined amount of movement.

BRIEF DESCRIPTION OF VARIOUS EMBODIMENTS OF THE INVENTION

According to various, but not necessarily all, embodiments of the invention there is provided a method comprising: receiving an indication of a disparity range of an object scene from each of two or more stereoscopic imaging viewpoint pairs; receiving an indication of a disparity constraint of a stereoscopic display; and selecting a stereoscopic imaging viewpoint pair whose disparity range is the largest and whose disparity range satisfies the disparity constraint of the stereoscopic display.

Some embodiments of the invention provide for the automatic selection of a stereoscopic imaging viewpoint pair from two or more stereoscopic imaging viewpoint pairs which has a disparity range for the scene environment that is the largest but that is also matched to a disparity capability of a stereoscopic display. In effect, the magnitude of the input disparity range can be adjusted so as to suit the output display's disparity capability by selecting the stereoscopic imaging viewpoint pair whose disparity range is the largest amongst the stereoscopic imaging viewpoint pairs but also whose disparity range satisfies a disparity constraint of the display. This enables the disparity range to be optimised for the object scene by having as large a disparity as possible that still meets the disparity criteria of the display on which the stereoscopic content is to be viewed on. This enhances the 3D effect and extends the apparent depth of stereoscopic content created using the selected stereoscopic imaging viewpoint pair. Thus, the embodiments enable effective use to be made of the display's available disparity range. Since the adjustment of input disparity range is effected by a selection of a stereoscopic imaging viewpoint pair, heavy computational processing requirements are obviated. The disparity constraint of the stereoscopic display can be dependent of factors such as physical / hardware limitations of the display as well as ergonomic factors such as comfortable user viewing limits for the display. Accordingly, the display of stereoscopic content, created using the selected stereoscopic imaging viewpoint pair, with disparities beyond the capabilities of the display is obviated which reduces undesirable stereoscopic viewing image artefacts, eye strain and viewer fatigue.

An object scene may, for example, be related to a scene to be stereographically imaged, i.e. the scene may comprise one or more objects located at a range of distances from the stereoscopic imaging viewpoint pairs.

A disparity range of an object scene from a stereoscopic imaging viewpoint pair may, for example, be a measure of a difference between: maximum and minimum disparity values, crossed and uncrossed disparity limits or disparities related to the closest and furthest objects in the scene perceived from the stereoscopic imaging viewpoint pair. Alternatively, the disparity range of an object scene may be a measure of the apparent depth perceived from the stereoscopic imaging viewpoint pair, or a measure of the difference in perspective of a scene perceived from each viewpoint of the stereoscopic imaging viewpoint pair or it may be a measure of how much an image taken from one viewpoint of the viewpoint pair differs from another image taken from the other viewpoint of the viewpoint pair. The disparity range of an object scene from a stereoscopic imaging viewpoint pair could be a scaled value of the above values.

A disparity range of an object scene from a stereoscopic imaging viewpoint pair may, for example, depend on parameters such as stereoscopic imaging viewpoint separation distance, a field of view of the imaging viewpoint and a scene's depth range, i.e. distance between a furthest object and closest object in the scene.

A stereoscopic imaging viewpoint pair may, for example, be a pair of imaging viewpoints, i.e. a pair of locations or perspectives from where a scene is viewed or imaged, the pair being separated by a distance. Such a distance may define a stereoscopic imaging viewpoint pair separation distance. Alternatively, the stereoscopic imaging viewpoint pair may, for example, be a pair of imaging devices.

A stereoscopic display may, for example, be a display capable of representing 3D images, an auto-stereoscopic display, a visual output apparatus capable of directing one image to one eye of a viewer and directing another image to the other eye of a viewer.

A disparity constraint of a stereoscopic display may, for example, be a value related to perceived maximum and minimum image depths, such as a measure of a difference between maximum and minimum perceived image depths, the display is able to display. The disparity constraint of a stereoscopic display may, for example, be a value related to maximum and minimum disparity limits, such as a measure of a difference between maximum and minimum disparity limits, the display is able to display. The disparity constraint of a stereoscopic display may, for example, be a value related to a difference between the crossed and uncrossed disparity limits the display is able to display. The disparity constraint could be a scaled value of the above mentioned disparity limits. Constraints could be due to physical and hardware limitations of the display, i.e. related to the finite dimensions and resolutions of the screen of the display, as well as ergonomic viewing factors relating to comfortable viewing parameters for the display.

The method may further comprise: receiving an indication of a disparity range of an altered object scene from each of the two or more stereoscopic imaging viewpoint pairs; selecting a stereoscopic imaging viewpoint pair whose disparity range is the largest and whose disparity range satisfies the stereoscopic display's disparity constraint. This enables the disparity range to be adjusted to suit a variable scene whilst still meeting the disparity criteria of the display.

The method may further comprise: capturing an image from at least one of the imaging viewpoint of the selected stereoscopic imaging viewpoint pair. This provides the advantage that such captured images have a disparity range suited to the scene which also meets the disparity constraints of the stereoscopic display.

The method may further comprise: storing an image captured from at least one of the imaging viewpoints. Preferably, an image is stored that is captured from at least the two imaging viewpoints of the selected stereoscopic imaging viewpoint pair. Alternatively, an image could be stored from each of the imaging viewpoints of every stereoscopic imaging viewpoint pair. This provides the advantage that images corresponding to a selected stereoscopic imaging viewpoint pair can be subsequently selected, processed and utilised.

The method may further comprise: storing an image, video or audio visual output captured from at least one of the imaging viewpoints. Preferably, the image, video or audio visual stored is that which is captured from at least the two imaging viewpoints of the selected stereoscopic imaging viewpoint pair. Alternatively, the image, video or audio visual output could be stored from each of the imaging viewpoints of every stereoscopic imaging viewpoint pair. This provides the advantage that images and videos corresponding to a selected stereoscopic imaging viewpoint pair can be subsequently selected, processed and utilised.

The method may further comprise: receiving images captured from each imaging viewpoint of the selected stereoscopic imaging viewpoint pair. This provides the advantage that such received images have a disparity range suited to the scene which also meets the disparity constraints of the stereoscopic display.

The method may further comprise: generating stereoscopic content derived from images captured from each imaging viewpoint of the selected stereoscopic imaging viewpoint pair. This provides the advantage that such generated stereoscopic content has a disparity range suited to the scene which also meets the disparity constraints of the stereoscopic display.

The method may further comprise: transmitting stereoscopic content derived from images captured from each imaging viewpoint of the selected stereoscopic imaging viewpoint pair. This provides the advantage that such transmitted stereoscopic content has a disparity range suited to the scene which also meets the disparity constraints of the stereoscopic display.

The method may further comprise: receiving stereoscopic content derived from images captured from each imaging viewpoint of the selected stereoscopic imaging viewpoint pair. This provides the advantage that such received stereoscopic content has a disparity range suited to the scene which also meets the disparity constraints of the stereoscopic display.

The method may further comprise: displaying, on the stereoscopic display, stereoscopic content derived from images captured from each imaging viewpoint of the selected stereoscopic imaging viewpoint pair. This provides the advantage that such displayed stereoscopic content has a disparity range suited to the scene which also meets the disparity constraints of the stereoscopic display.

The indication of the disparity constraint of the stereoscopic display may comprise an indication of a maximum disparity range of the stereoscopic display. The selecting of a stereoscopic imaging viewpoint pair whose disparity range satisfies the disparity constraint of the stereoscopic display may comprise selecting the stereoscopic imaging viewpoint pair whose disparity range is less than the maximum disparity range of the stereoscopic display. This provides the advantage that the stereoscopic imaging viewpoint pair which is selected optimally matches the disparity range of the stereoscopic display.

According to various, but not necessarily all, embodiments of the invention there is provided an apparatus comprising: at least one memory storing computer program instructions; at least one processor configured to execute the computer program instructions to cause the apparatus at least to perform: receiving an indication of a disparity range of an object scene from each of two or more stereoscopic imaging viewpoint pairs; receiving an indication of a disparity constraint of a stereoscopic display; and selecting a stereoscopic imaging viewpoint pair whose disparity range is the largest and whose disparity range satisfies the disparity constraint of the stereoscopic display.

The apparatus may be for stereoscopic imaging. The apparatus may be embodied on a portable handheld device, a user equipment device or a server.

According to various, but not necessarily all, embodiments of the invention there is provided a computer program that, when run on a computer, performs: receiving an indication of a disparity range of an object scene from each of two or more stereoscopic imaging viewpoint pairs; receiving an indication of a disparity constraint of a stereoscopic display; and selecting a stereoscopic imaging viewpoint pair whose disparity range is the largest and whose disparity range satisfies the disparity constraint of the stereoscopic display.

According to various, but not necessarily all, embodiments of the invention there is provided a computer readable storage medium encoded with instructions that, when executed by a processor, performs: receiving an indication of a disparity range of an object scene from each of two or more stereoscopic imaging viewpoint pairs; receiving an indication of a disparity constraint of a stereoscopic display; and selecting a stereoscopic imaging viewpoint pair whose disparity range is the largest and whose disparity range satisfies the disparity constraint of the stereoscopic display.

According to various, but not necessarily all, embodiments of the invention there is provided an apparatus comprising: means for receiving an indication of a disparity range of an object scene from each of two or more stereoscopic imaging viewpoint pairs; means for receiving an indication of a disparity constraint of a stereoscopic display; and means for selecting a stereoscopic imaging viewpoint pair whose disparity range is the largest and whose disparity range satisfies the disparity constraint of the stereoscopic display.

Some embodiments provide the advantage that the disparity range can be adjusted to suit the object scene whilst still meeting the disparity criteria of the display without the need of computationally intensive image processing. Effective use of the display's available disparity range is provided. The display of disparities beyond the capabilities of the stereoscopic display is reduced which reduces undesirable imaging artefacts, eye strain and viewer fatigue.

BRIEF DESCRIPTION OF THE DRAWINGS

For a better understanding of various examples of embodiments of the present invention reference will now be made by way of example only to the accompanying drawings in which:

Fig. 1 illustrates a flow diagram of a method according to various embodiments of the invention;

Fig. 2 illustrates a schematic diagram of an apparatus according to various embodiments of the invention;

Fig. 3 illustrates a schematic diagram of two stereoscopic imaging viewpoint pairs according to various embodiments of the invention;

Fig. 4 illustrates a schematic diagram of an alternative arrangement of stereoscopic imaging viewpoint pairs according to various embodiments of the invention;

Fig. 5A illustrates a plan view of a schematic diagram of a stereoscopic imaging viewpoint pair and object scene according to various embodiments of the invention;

Figs 5B and 5C illustrate schematic diagrams of an image captured from each of the imaging viewpoints of the stereoscopic imaging viewpoint pair of Fig. 5A;

Fig. 6 illustrates a flow diagram of another method according to various embodiments of the invention;

Fig. 7 illustrates a schematic diagram of an alternative apparatus according to various embodiments of the invention;

Fig. 8 illustrates a flow diagram of methods according to various embodiments of the invention; and

Figs. 9A, 9B, 9C and 9D illustrate schematic diagrams of alternative apparatus implementations and configurations according to various embodiments of the invention.

## DETAILED DESCRIPTION OF VARIOUS EMBODIMENTS OF THE INVENTION

The Figures illustrate a method comprising: receiving (101) an indication of a disparity range of an object scene from each of two or more stereoscopic imaging viewpoint pairs; receiving (102) an indication of a disparity constraint of a stereoscopic display; and selecting (103) a stereoscopic imaging viewpoint pair whose disparity range is the largest and whose disparity range satisfies the disparity constraint of the stereoscopic display.

## Description

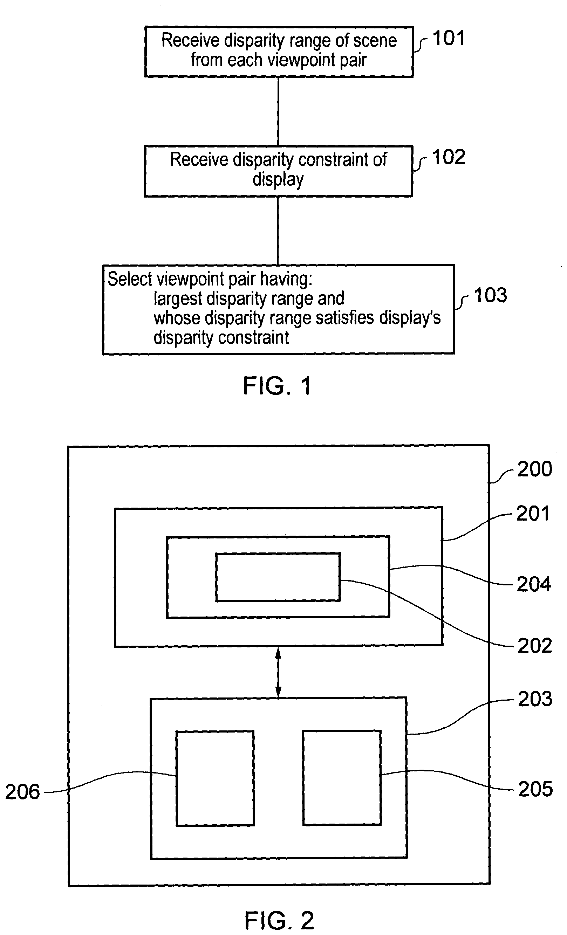

Fig. 1 illustrates a flow diagram of a method according to various embodiments of the invention. At block 101, the process of receiving an indication of a disparity range of an object scene from each of two or more stereoscopic imaging viewpoint pairs is carried out. At block 102, the process of receiving an indication of a disparity constraint of a stereoscopic display is carried out. Finally, at block 103 the process of selecting a stereoscopic imaging viewpoint pair whose disparity range is the largest and whose disparity range satisfies the disparity constraint of the stereoscopic display is carried out.

These processes can be performed by a controller. Implementation of the controller can be in hardware alone (a circuit, a processor...), have certain aspects in software including firmware alone or can be a combination of hardware and software (including firmware). The controller may be implemented using instructions that enable hardware functionality, for example, by using executable computer program instructions in a general-purpose or special-purpose processor that may be stored on a computer readable storage medium (disk, memory etc) to be executed by such a processor.

Fig. 2 illustrates a schematic diagram of an example of an apparatus 200 for effecting the method of Fig. 1. The apparatus, controller 200, comprises at least one memory 201 storing computer program instructions 202 and at least one processor 203 configured to execute the computer program instructions to cause the apparatus at least to perform: receiving an indication of a disparity range of an object scene from each of two or more stereoscopic imaging viewpoint pairs; receiving an indication of a disparity constraint of a stereoscopic display; and selecting a stereoscopic imaging viewpoint pair whose disparity range is the largest and whose disparity range satisfies the disparity constraint of the stereoscopic display.

The processor 203 is configured to read from and write to the memory 201. The processor 203 may also comprise an output interface 205 via which data and/or commands are output by the processor 203, such as an indication of the selected stereoscopic imaging viewpoint pair, and an input interface 206 via which data and/or commands are input to the processor 203, such an indication of a disparity range of an object scene from each stereoscopic imaging viewpoint pairs as well as an indication of a disparity constraint of a stereoscopic display.

The memory 201 stores a computer program 204 comprising computer program instructions 202 that control the operation of the apparatus 200 when loaded into the processor 203. The computer program instructions 202 provide the logic and routines that enables the apparatus to perform the method illustrated in Fig. 1. The processor 203, by reading the memory 201, is able to load and execute the computer program 204.

The computer program 204 may arrive at the apparatus 200 via any suitable delivery mechanism. The delivery mechanism may be, for example, a computer-readable storage medium, a computer program product, a memory device, a record medium such as a compact disc read-only memory or digital versatile disc, an article of manufacture that tangibly embodies the computer program. The delivery mechanism may be a signal configured to reliably transfer the computer program. The apparatus 200 may propagate or transmit the computer program 204 as a computer data signal.

Although the memory 201 is illustrated as a single component it may be implemented as one or more separate components some or all of which may be integrated/removable and/or may provide permanent/semi-permanent/ dynamic/cached storage.

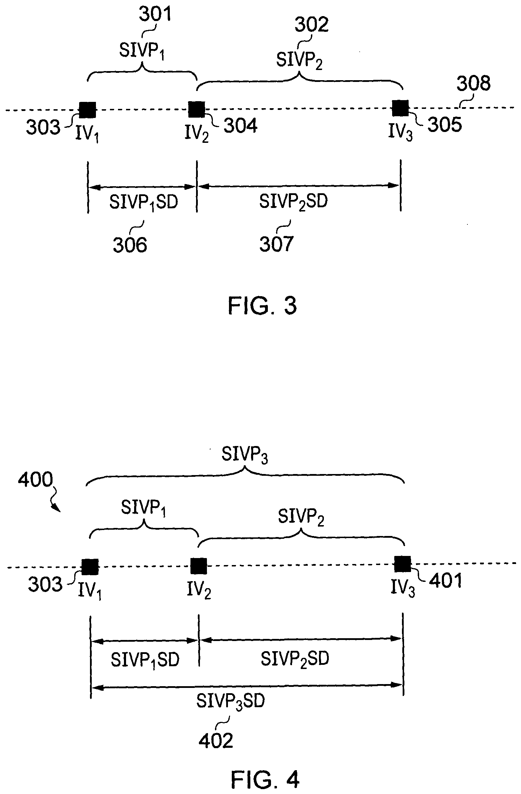

Fig. 3 illustrates a schematic diagram of two stereoscopic imaging viewpoint pairs 301 and 302 according to various embodiments of the invention. The first stereoscopic imaging viewpoint pair, $SIVP_1$, 301 comprises two imaging viewpoints $IV_1$ 303 and $IV_2$ 304 which are separated by a distance which defines a stereoscopic imaging viewpoint pair separation distance, $SIVP_1SD$, 306. Likewise, the second stereoscopic imaging viewpoint pair, $SIVP_2$, also comprises two imaging viewpoints $IV_2$ 304 and $IV_3$ 305 separated by a stereoscopic imaging viewpoint pair separation distance, $SIVP_2SD$ 307. Each imaging viewpoint could correspond to an imaging device capable of capturing images such as a charge-coupled device, or could represent a location where such an imaging device is located. Each imaging viewpoint is fixed in its position and arranged along the same axis 308. Advantageously, by having the imaging viewpoints fixed, their relative positions and alignments can be accurately predefined.

In this embodiment, the imaging viewpoint 304 is a member of both the first and second stereoscopic imaging viewpoint pairs. Such a configuration advantageously makes efficient use of space and components by maximizing the number of possible stereoscopic imaging viewpoint pairs using the fewest number of imaging viewpoints. However, it will be appreciated that a viewpoint of one stereoscopic imaging viewpoint pair need not coincide with a viewpoint of another stereoscopic imaging viewpoint pair.

Fig. 4 illustrates a schematic diagram of an alternative arrangement of stereoscopic imaging viewpoint pairs according to various embodiments of the invention. The arrangement 400 is similar to that shown in Fig. 3 but with an additional stereoscopic imaging viewpoint pair, $SIVP_3$, 401 comprising viewpoints $IV_1$ 303 and $IV_3$ 305 separated by stereoscopic imaging viewpoint pair separation distance, $SIVP_3SD$, 402.

According to one embodiment, the stereoscopic imaging viewpoint pair separation distances respectively are:

$SIVP_1SD$ = 2 cm to 3 cm, or in the region of 2.5 cm
$SIVP_2SD$ = 3 cm to 5 cm, or in the region of 4 cm
$SIVP_3SD$ = 5 cm to 8 cm, or in the region of 6.5 cm

A stereoscopic imaging viewpoint pair separation distance of approximately 2.5 cm is suitable for enabling zoom functionality of the imaging viewpoints, since higher zoom levels reduce the field of view of the imaging viewpoints which scales up the disparity range. Such scaled up disparity ranges can be accommodated by reducing the stereoscopic imaging viewpoint pair separation distance. Furthermore, such a stereoscopic imaging viewpoint pair separation distance is also useful for 3D video conferencing using a handheld portable device.

A stereoscopic imaging viewpoint pair separation distance of approximately 4 cm is suitable for stereoscopic viewing on a portable hand held display for generic scenes with object ranges from 1.5 metres to infinity.

A stereoscopic imaging viewpoint pair separation distance of approximately 6.5 is suitable for orthostereoscopy viewing on a display where the viewing distance is greater than 2 metres, such as in a cinema. Also, such a stereoscopic imaging viewpoint pair separation distance is suitable for viewing scenes with object ranges from 3 metres to infinity.

Accordingly to yet another embodiment, the stereoscopic imaging viewpoint pair separation distances are spaced out by a factor of 1.6 and 1.62. Of course other numerical values could always be chosen.

According to another embodiment, the stereoscopic imaging viewpoint pair separation distance corresponds to an inter pupil separation distance, i.e. the distance between a viewers eyes, typically within the range of 6 - 7 cm.

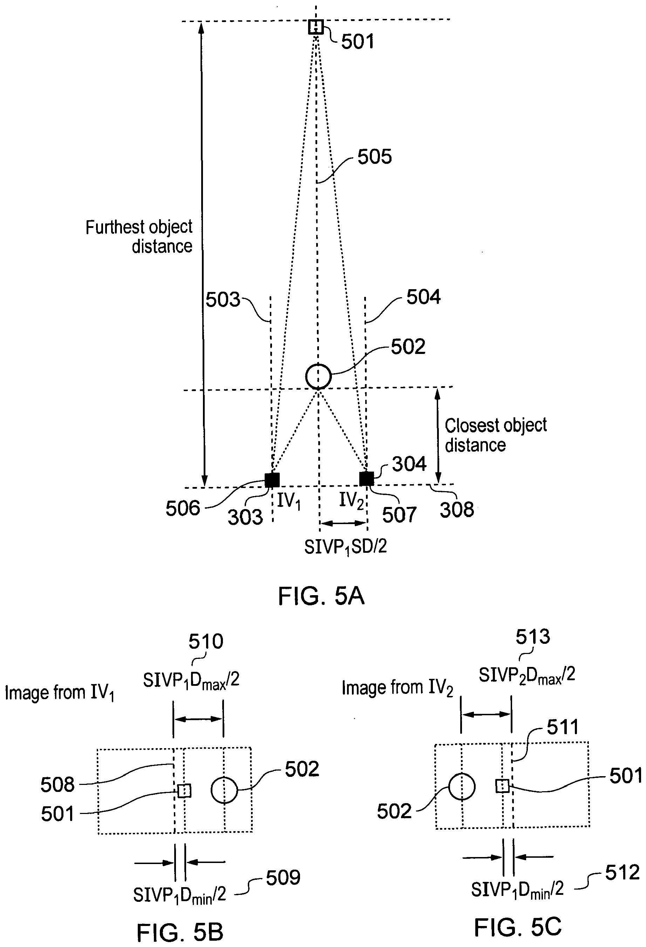

The disparity range of an object scene is determined from the perspective of the viewpoints of the stereoscopic imaging viewpoint pairs. One example of how a disparity range of an object scene from the stereoscopic imaging viewpoint pair $SIVP_1$ 301 from Fig 3 or Fig 4 can be determined will now be described. Fig. 5A illustrates a plan view of the stereoscopic imaging viewpoint pair $SIVP_1$ 301 comprising imaging viewpoints $IV_1$ 303 and $IV_2$ 304 which are separated by a stereoscopic imaging viewpoint pair separation distance $SIVP_1SD$ and positioned along a base axis 308. An imaging device 506, 507, able to capture images of a scene, such as a camera, is located at each imaging viewpoint $IV_1$ and $IV_2$ of the stereoscopic imaging viewpoint pair $SIVP_1$. The first imaging device 506 and imaging viewpoint $IV_1$ each have an optical axis 503 which is parallel to the optical axis 504 of the other imaging device 507 and imaging viewpoint $IV_2$. The optical axes 503 and 504 are also perpendicular to the base axis 308. It is possible to have a configuration of imaging viewpoints and imaging devices whose optical axes are non-parallel such that they intersect at some point. Such an off parallel configuration is called a "toe-in" configuration. A square 501 and a circle 502 represent the furthest and closest objects respectively in a scene to be stereoscopically imaged. For ease of explanation, these objects are shown as being located along a central axis 505 parallel to the optical axes 503, 504 and mid way between the viewpoints. Of course, a real world scene would likely not have its furthest and closest objects centrally aligned.

Figs 5B and 5C illustrate schematic diagrams of an image captured by the imaging device located at each of the imaging viewpoints of the stereoscopic imaging viewpoint pair of Fig. 5A. Fig. 5B shows an image captured from the first viewpoint $IV_1$ 303 by the first imaging device 506. The central line 508 through the image corresponds to the imaging device's optical axis 503. In this image, the furthest object, square 501, is positioned a certain distance 509 to the right of the central line 508. The closest object, circle 502, is positioned a greater distance 510 to the right of the central line 508.

Fig. 5C which shows an image captured from the second viewpoint $IV_2$ 304 by the second imaging device 507. The furthest object, square 501, is positioned a certain distance 512 to the left of the central line 511 of the image which relates to the optical axis 504 of imaging device 507 and second viewpoint. The closest object, circle 502, is positioned a greater distance 512 to the left of the central line 511.

The minimum disparity value, $SIVP_1D_{min}$, of the scene from stereoscopic imaging viewpoint pair 301, which relates to the apparent depth of the furthest object, is a measure of the difference between distances 509 and 512.

The maximum disparity value, $SIVP_1D_{max}$, of the scene from stereoscopic imaging viewpoint pair 301, which relates to the apparent depth of the closest object, is a measure of the difference between distances 510 and 513.

The maximum disparity range, $SIVP_1D$, of an object scene from stereoscopic imaging viewpoint pair 301 can be determined by calculating the difference between the maximum disparity, $SIVP_1D_{max}$ and the minimum disparity, $SIVP_1D_{min}$, i.e.:

$$SIVP_1D = \left| SIVP_1D_{max} \right| - \left| SIVP_1D_{min} \right|$$

In light of the centrally symmetric location of the furthest and closest objects in the example given in Fig. 5A, the distance 509 relates to half of the minimum disparity, $SIVP_1D_{min}/2$ and the distance 510 relates to half the maximum disparity, $SIVP_1D_{max}/2$. Likewise, the distance 512 relates to half of the minimum disparity, $SIVP_1D_{min}/2$ and the distance 513 relates to half the maximum disparity, $SIVP_1D_{max}/2$.

The determination of the disparity range of an object scene from each of two or more stereoscopic imaging viewpoint pairs can be determined by any suitable method, for example, by block matching and image segmentation of images captured from each imaging viewpoint of a stereoscopic imaging viewpoint pair. Alternatively, the disparities could be calculated for each stereoscopic imaging viewpoint pair based on knowledge of parameters such as:

the stereoscopic imaging viewpoint separation distance
the field of view of the imaging viewpoint
the focal length of lenses of the imaging devices capturing an image
real world distances of the closest and furthest objects (which could be determined via suitable range finding methodologies such those involving sound waves electromagnetic radiation) and
the resolution of the camera's charge-coupled device array.

Since the disparity range of an object scene is determined from the imaging viewpoints of the stereoscopic imaging viewpoint pairs, in some embodiments, the disparity range inherently includes aspects of the imaging viewpoints such as field of view and zoom levels. Advantageously, the stereoscopic imaging viewpoint pair selected already takes into account the field of view and zoom level of the imaging viewpoints. Thus, various embodiments of the present system are able to adjust to varying fields of view and different zoom levels of the imaging viewpoints.

According to another embodiment, an image processing algorithm, such as to alter the scale of the images by a scaling factor, is applied to the images 5B and 5C from the stereoscopic imaging viewpoint pair prior to calculating the disparity range. By reducing the size of the images, the disparity of the images is likewise also reduced. Advantageously, where it is found that the disparity range of an object scene for a stereoscopic imaging viewpoint pair is only slightly larger than disparity range of a stereoscopic display, the disparity range of the stereoscopic imaging viewpoint pair could be reduced to below that of the disparity range of a stereoscopic display by reducing the image sizes of the images from the stereoscopic imaging viewpoint pair. For example, where a disparity range of an object scene for a stereoscopic imaging viewpoint pair is within: 5%, 10% 20%, 25% or 30% greater than the disparity range of the disparity range of a stereoscopic display, the disparity range could be reduced by a corresponding requisite amount so as to bring it to within acceptable levels by reducing the scale of the images from the imaging viewpoints. Advantageously, this enables a stereoscopic viewpoint pair to be selected with a larger imaging viewpoint separation distance than would otherwise be the case, though at a cost of smaller images from the stereoscopic imaging viewpoint pair and smaller non-full screen display of stereoscopic content.

According to yet another embodiment, the field of view of the imaging viewpoints is altered, such as to alter the disparity of the images 5B and 5C from the stereoscopic imaging viewpoint pair prior to calculating the disparity range. By increasing the field of view of the imaging viewpoints, the disparity of the images is reduced. Advantageously, where it is found that the disparity range of an object scene for a stereoscopic imaging viewpoint pair is only slightly larger than disparity range of a stereoscopic display, the disparity range of the stereoscopic imaging viewpoint pair could be reduced to below that of the disparity range of a stereoscopic display by increasing the field of view of the images from the stereoscopic imaging viewpoint pair. For example, where a disparity range of an object scene for a stereoscopic imaging viewpoint pair is within: 5%, 10% 20%, 25% or 30% greater than the disparity range of the disparity range of a stereoscopic display, the disparity range could be reduced by a corresponding requisite amount so as to bring it to within acceptable levels by increasing the field of view of the imaging viewpoints. Advantageously, this enables a stereoscopic viewpoint pair to be selected with a larger imaging viewpoint separation distance than would otherwise be the case.

According to one embodiment, the disparity range of a scene is detected at a plurality of points in the scene. This detection could happen in real-time, enabling a re-selection of a stereoscopic image viewpoint in real-time adjusting to a varying scene, for example as an object moves closer towards the viewpoints.

Disparity constraints of a stereoscopic display include limitations of feasible display disparity ranges based on ergonomic factors relating to a viewer's viewing distance to the display.

According to one embodiment, a stereoscopic display's disparity range, SDD, is determined by calculating the difference between a maximum display disparity and a minimum display disparity where:

the maximum display disparity is the value of $P_{display}$ for $V_{object} = V^{Max}$
the minimum display disparity is the value of $P_{Display}$ for $V_{object} = V^{Min}$ i.e.

$$SDD = \left| P_{display}(V^{Max}) \right| - \left| P_{display}(V^{Min}) \right|$$

$$P_{display} = \frac{IPD}{2} - \frac{IPD \cdot V_{display}}{2 \cdot V_{object}}$$

$$V^{Max} = \frac{V_{Display}}{1 - V_{Display} \cdot F}$$

$$V^{Min} = \frac{V_{Display}}{1 + V_{Display} \cdot F}$$

$V_{display}$ = distance from viewer's pupils to the display
$V_{object}$ = perceived distance of object viewed, i.e. virtual object distance
$V^{Max}$ = perceived maximum distance of object viewed, i.e. maximum virtual object distance
$V^{Min}$ = perceived minimum distance of object viewed, i.e. minimum virtual object distance
IPD = Inter pupil distance, i.e. distance between a viewer's eyes
F = eye flexibility (dioptre) relating to the comfortable viewing parameter for a human, typically found to be in the range of $\pm 0.5$ $\pm 0.75$

The eye flexibility factor relates to the 'accommodation-convergence mismatch' wherein a viewer's eyes accommodate to the distance of the display but converge to a different distance relating to the virtual object's apparent depth. This situation causes a discrepancy which can lead to eye strain. As indicated about, it has been found that an eye flexibility in the range of $\pm 0.5$ $\pm 0.75$ dioptre enables comfortable viewing.

Differing stereoscopic displays have differing available disparity maxima and minima as well as differing disparity ranges for comfortable viewing. Displaying stereoscopic content on a suitably adopted cinema screen, where the display distance is much greater than 2m, enables the perception of infinite virtual object distances. Whereas, for displays viewed at closer distances, such as is the case for handheld devices it is not possible to have comfortable viewing of virtual objects at an infinite distance due to the above effect. There are other factors such as display size that affect the disparity range of a display by limiting the largest uncrossed disparity (relating to a maximum virtual depth) and greatest crossed disparity (relating to a minimum virtual depth).

The following provides a worked through example of the processes involved in the selection of a stereoscopic viewpoint pair.

In this example, there are 3 stereoscopic imaging viewpoint pairs each having an imaging viewpoint separation distance of 2.5 cm, 4 cm and 6 cm respectively. At each imaging viewpoint of the viewpoint pairs, there is a 1.6 megapixel camera. The object scene to be imaged consists of objects of a finite range, i.e. between 2 metres and 5 metres from the stereoscopic imaging viewpoint pairs.

| Imaging viewpoint separation distance (cm) | Closest object imaged disparity (no. of pixels) | Furthest object imaged disparity (no. of pixels) | Maximum disparity range (no. of pixels) |
| --- | --- | --- | --- |
| 2.5 | -62.5 | -30 | 32.5 |
| 4 | -100 | -48 | 52 |
| 6.5 | -162.5 | -78 | 84.5 |

The disparity values above are given a negative sign as is customary for representing crossed disparities (positive disparities are used to represent uncrossed disparities).

The stereoscopic display used in this example has a resolution of 480 x 800, i.e. it has 384,000 pixels. The display can handle a crossed disparity, i.e. for foreground objects perceived in front of the display, of up to -10 pixels (by convention crossed disparities are negative sign). The display can handle an uncrossed disparity, i.e. for background objects perceived in behind the display, of 13 pixels (by convention crossed disparities are positive). Therefore, the display's disparity range, which is a measure of the difference between the uncrossed and crossed disparity limits, is 23 pixels in the display space.

However, the 1.6 megapixel images from each of the cameras need to be scaled so as to fit to the display. In this case, the images are reduced by a scale factor of 4. This correspondingly reduces the camera space's disparity range by a factor of 4.

| Imaging viewpoint separation distance (cm) | Scaled closest object imaged disparity (no. of pixels) | Scaled furthest object imaged disparity (no. of pixels) | Scaled maximum disparity range (no. of pixels) |
| --- | --- | --- | --- |
| 2.5 | -15.625 | -7.5 | 8.125 |
| 4 | -25 | -12 | 13 |
| 6.5 | -40.625 | -19.5 | 21.125 |

The stereoscopic imaging viewpoint pair is selected which provides a disparity range, i.e. the scaled maximum disparity range which is the greatest and is less that a disparity constraint of the display, i.e. the display's disparity range. In this example, the stereoscopic imaging viewpoint pair whose imaging viewpoint separation distance is 6.5 cm is selected as it gives the largest disparity range of 21.125 pixels, but is still less than the disparity constraint of 23 pixels.

Having selected the optimum stereoscopic imaging viewpoint pair, images captured at their respective viewpoints, i.e. the raw images taken from each camera of the imaging viewpoints of the selected viewpoint pair, could then be appropriately offset. They are offset so that the closest object imaged disparity and the furthest object imaged disparity map onto the values of the display's crossed disparity limit and uncrossed disparity limit respectively.

The offsetting can be effected by applying a Euclidean shift image processing algorithm. In the present case, a shift of +32 pixels (i.e. moving the right image right by 16 pixels and moving the left image left by 16 pixels) is applied such that the disparities of the stereoscopic imaged scene would be shifted from -41 pixels and -20 pixels (N.B. -40.625 pixels and -19.5 pixels have been converted to a whole number of pixels) to -9 pixels to +12 pixels which is within the disparity constraints of the display and would be comfortable to view.

Alternatively, one could approach the determination of the relevant disparity ranges by scaling up the parameters of the display's disparities, i.e. by a factor of 4 in the present case, such that the greatest crossed disparity is -40 pixels and the greatest uncrossed disparity is 52 pixels. Therefore, the disparity constraint of the display would correspond to a scaled disparity range of the display to suit the camera's resolution, which in this case would be 92 pixels in the display space. Again, the same stereoscopic imaging viewpoint pair would be selected, i.e. whose imaging viewpoint separation distance is 6.5 cm, since it provides a disparity range, i.e. the maximum disparity range (in this case 84.5 pixels) which is also is less that the disparity constraint of the display (in this case 92 pixels).

Having selected the optimum stereoscopic imaging viewpoint pair, the raw images taken from each camera of the imaging viewpoints of the selected viewpoint pair, could then be appropriately offset so that their disparity limits map onto the values of the display's crossed disparity limit and uncrossed disparity limit respectively. In this cases, a shift of +126 pixels (i.e. moving the right image right by 63 pixels and moving the left image left by 63 pixels) is applied such that the disparities of the stereoscopic imaged scene would be shifted from -163 pixels and -78 pixels (N.B. -162.5 pixels have been converted to a whole number of pixels) to -36 pixels and +48 pixels which is within the scaled up disparity constraints of the display, -40 pixels to 52 pixels, which would become -9 pixels to 12 pixels when re-scaled for viewing.

Now let us consider where the situation changes such that the object scene no longer consists merely of objects with a finite range of up to 5 metres, i.e. there are now objects at an infinite distance.

| Imaging viewpoint separation distance (cm) | Closest object imaged disparity (no. of pixels) | Furthest object imaged disparity (no. of pixels) | Maximum disparity range (no. of pixels) |
|---|---|---|---|
| 2.5 | -62.5 | 0 | 62.5 |
| 4 | -100 | 0 | 100 |
| 6.5 | -162.5 | 0 | 162.5 |

As shown above, after applying a suitable scaling factor of 4, we have 92 pixels allowance in the disparity range of the display device. In this case, the stereoscopic imaging viewpoint pair that is selected would now be that which has a 2.5 cm imaging viewpoint separation distance, since it provides the maximum disparity range (in this case 62.5 pixels) and is less that the display's scaled disparity range (in this case 92 pixels).

Alternatively, since the stereoscopic imaging viewpoint pair whose imaging viewpoint separation distance is 4 cm has a maximum disparity range (100 pixels) only marginally over that of display's scaled disparity range (in this case 92 pixels), by applying an alternative scale factor, e.g. 4.35 instead of 4, the disparity constraint of the display, i.e. the display's scaled disparity range, would now be 100.05 and thus the stereoscopic imaging viewpoint pair having a 4 cm imaging viewpoint separation distance could be selected. However, the resultant stereoscopic image would not be full screen image on the display but would take up only 92% of the image. This advantageously makes more effective use of the display's disparity capability and enables an enhanced 3D effect to be perceived, though the stereoscopic image would not be displayed at full screen.

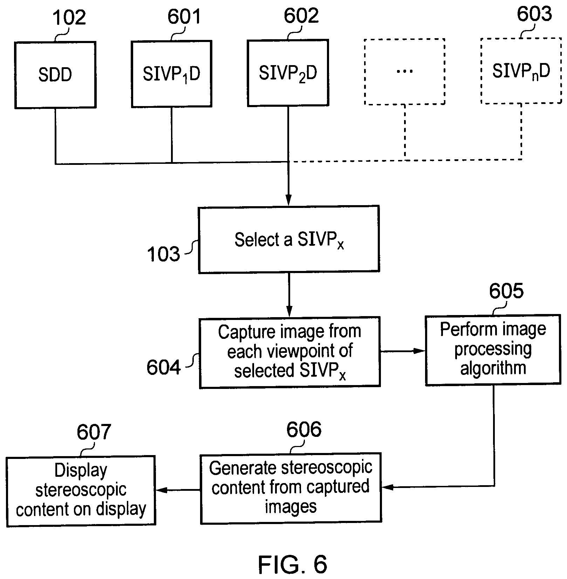

Fig. 6 illustrates a flow diagram of another method according to various embodiments of the invention. Blocks 601, 602 and 603 correspond to block 101 of Figure 1 regarding receiving an indication of a disparity range of an object scene from each of a first, a second ... an Nth stereoscopic imaging viewpoint pair ($SIVP_1D$, $SIVP_2D$, ... $SIVP_nD$ respectively). Block 102 performs the process of receiving of an indication of a disparity constraint of a stereoscopic display, SDD. Block 103 performs the process of selecting a stereoscopic imaging viewpoint pair, $SIVP_x$, whose disparity range $SIVP_xD$ is the largest of each of $SIVP_1D$, $SIVP_2D$, ... $SIVP_nD$ but also whose disparity range satisfies a disparity constraint, such as $SIVP_xD < SDD$.

Following the selection of the stereoscopic imaging viewpoint pair $SIVP_x$ which meets the selection criteria, block 604 performs the process of capturing an image from each imaging viewpoint of the selected stereoscopic imaging viewpoint pair, for example by an imaging device located at each imaging viewpoint, to create an image pair. It will be appreciated that a sequence of images or a video stream could likewise be captured

Optionally image processing algorithms can be applied to the captured images as indicated in block 605. Such image processing algorithms include, but are no limited to performing: Euclidian shift, keystone correction and cropping of the images as well as image matching algorithms to match an image pair's image properties such as zoom level, image dimension size, and colour gamut, brightness and contrast. The Euclidian shift image transformation offsets the total disparity of stereoscopic content but does not influence the actual range of disparities.

Block 606 performs the process of generating stereoscopic content derived from images captured from each imaging viewpoint of the selected stereoscopic imaging viewpoint pair. Stereoscopic content may be: live or pre-recorded images or video streams captured from an imaging viewpoint, a stereoscopic image derived from images captured from a stereoscopic imaging viewpoint pair, a plurality of stereoscopic images or stereoscopic video derived from images or video captured from a stereoscopic imaging viewpoint pair. Also, the stereoscopic content may comprises indications concerning the disparity ranges of an object scene from a stereoscopic imaging viewpoint pair. The stereoscopic content may be suitably formatted to suit a format required for a particular type of stereoscopic display technology.

Finally, block 607 performs the process of displaying, on the stereoscopic display related to the stereoscopic display constraints, stereoscopic content derived from images captured from each imaging viewpoint of the selected stereoscopic imaging viewpoint pair.

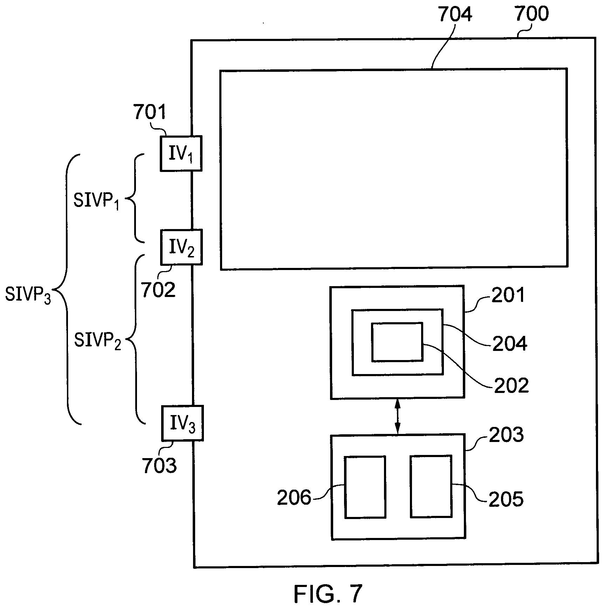

Fig. 7 illustrates a schematic diagram of an apparatus according to various embodiments of the invention for effecting the method of Fig. 6.

The apparatus 700 comprises a memory 201 storing a computer program 204 comprising computer program instructions 202. The apparatus comprises a processor 203 which comprises an output interface 205 via which data and/or commands are output by the processor 203 and an input interface 206 via which data and/or commands are input to the processor 203. As with the apparatus 200 of Fig. 2, the processor 203 of apparatus 700 is configured to execute the computer program instructions 202 to cause the apparatus 700 to perform the method of Fig. 1.

The apparatus further comprises imagers 701, 702 and 703, such as imaging devices capable of capturing an image of an object scene. The imagers 701, 702 and 703 are arranged to as to be located in positions corresponding to imaging viewpoints $IV_1$, $IV_2$ and $IV_3$. Accordingly, stereoscopic imaging viewpoint pairs $SIVP_1$, $SIVP_2$ and $SIVP_3$ correspond to imager pairs: imager 701 and imager 702, imager 702 and imager 703, and imager 701 and imager 703 respectively.

Each imager captures an image of the object scene as perceived from its respective viewpoint. These images are processed by the processor 203 to determine a disparity range of the object scene as perceived from each stereoscopic imaging viewpoint pair, i.e. each imaging pair. These are inputted to the processor along with an indication of a disparity constraint of the stereoscopic display 704, which could be pre-stored in the memory 201.

The processor 203 performs the method of block 103 to select one of the stereoscopic imaging pairs meeting the selection criteria.

The computer program instructions 202 also provide the logic and routines that enables the apparatus 700 to perform the methods illustrated in Fig. 6 as set out below.

Once a stereoscopic imaging viewpoint pair has been selected, a controller 203 controls the selected stereoscopic imaging viewpoint pair to capture an image from each appropriate respective imager which is stored in memory means 201, thereby effecting the process of block 604. Optionally the processor 203 can apply image processing algorithms to the captured images thereby effecting the process of block 605. The processor 203 generates stereoscopic content based on the captured images, suitably formatted for display on the display 704, thereby effecting block 607.

In one embodiment, the apparatus 700 is embodied on a portable hand held electronic device, such as a mobile telephone or personal digital assistant, that may additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, Television/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

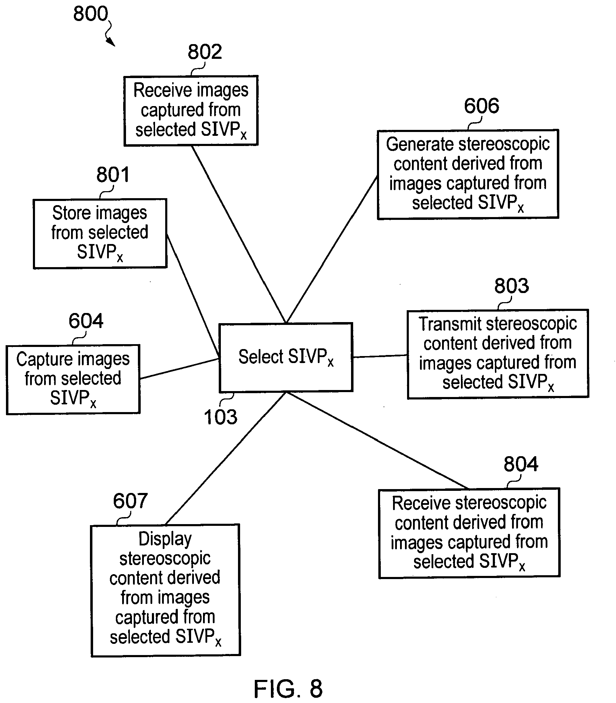

Fig. 8 illustrates a flow diagram of methods according to various embodiments of the invention. Following the processes described with regards to Fig. 1 resulting in the selection of a selected stereoscopic imaging viewpoint pair at block 103 following blocks 101 and 102, Figure 8 shows various processes 800 that can then be effected making use of the stereoscopic imaging viewpoint pair selected at block 103.

Block 604 relates to capturing an image from each imaging viewpoint of the selected stereoscopic imaging viewpoint pair as discussed with regards to Fig. 6. It will be appreciated that a sequence of images or a video stream could likewise be captured.

Block 801 performs the process of storing an image captured from each of two or more imaging viewpoints. Again, it will be appreciated that a sequence of images or a video stream could likewise be captured. Preferably, at least two of the viewpoints correspond to viewpoints of the selected stereoscopic imaging viewpoint pair. If images captured from two or more, or yet more preferably all, of the imaging viewpoints are stored in a memory, following the process of selecting a stereoscopic imaging viewpoint pair that meets a display's disparity criteria, images from the appropriate imaging viewpoints corresponding to the selected stereoscopic imaging viewpoint pair can be retrieved from the memory for display. Advantageously, were it desired to display stereoscopic content on another display with a differing disparity constraint, the selection process could be repeated and images from the appropriate imaging viewpoints corresponding to the newly selected stereoscopic imaging viewpoint pair can be retrieved from the memory for display. Advantageously, such a setup effectively enables the recordal of several sets of images that can be subsequently selected so as to meet the disparity constraint criteria of one or more displays. This allows the display of stereoscopic content that can be viewed on a range of devices, such as: portable hand held displays, home TV liquid crystal display and plasma displays and projection based displays.

Block 802 performs the process of receiving images or video stream captured, either contemporaneously in real time or non- contemporaneously i.e. previously captured images or video streams, from each imaging viewpoint of the selected stereoscopic imaging viewpoint pair.

Block 606 relates to the generation of stereoscopic content as discussed with regards to Fig. 6.

Block 803 performs the process of transmitting stereoscopic content derived from images captured from each imaging viewpoint of the selected stereoscopic imaging viewpoint pair.

Block 804 performs the process of receiving stereoscopic content derived from images captured from each imaging viewpoint of the selected stereoscopic imaging viewpoint pair.

Block 607 relates to the display of stereoscopic content as discussed with regards to Fig. 6.

It is to be appreciated that the various method processes 800 shown in Fig. 8 can be implemented on various software and hardware platforms, not least of which include the apparatuses 200 and 700 of Figs. 2 and 7.

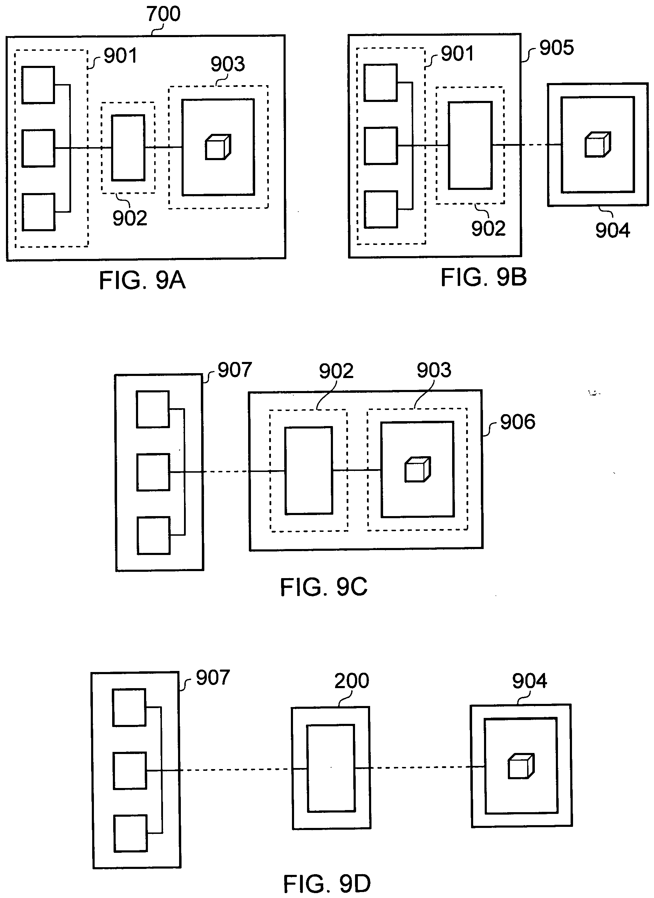

Fig 9A shows a schematic diagram of apparatus 700, as in described in relation to Fig 7, which comprises: stereoscopic imaging viewpoint pairs, a controller and a display all housed in one unit 700. Such an apparatus may be thought of as an "all in one" apparatus comprising 3 operationally coupled modules: an imager module 901, a controller module 902 and a display module 903.

The controller module 902 selects which one of the stereoscopic imaging viewpoint pairs of the imager module 901 is optimal for an object scene to be imaged and disparity constraints of a display of the display module that are to be met. In addition, the modules are variously arranged, at least, to perform the processes of the blocks shown in Fig. 8, for example:

The imager module 901 is controlled by the controller module to capture images from the selected stereoscopic imaging viewpoint pair.
The controller module 902 receives the images from the imager module 901.
The controller module 902 stores the images from the imager module 901.
The controller module 902 conveys the images the display module 903.
The controller module 902 or display module 903 generates stereoscopic content from the images
The controller module transmits the stereoscopic content to the display module.
The display module 903 displays the stereoscopic content.

Data relating to: indications of disparity ranges from stereoscopic imaging viewpoint pairs and indications of disparity constraints of stereoscopic displays as well as stereoscopic content can be transmitted from one module to another. However, it will be appreciated that these modules need not necessarily all be housed in one unit as a single physical entity but may be separate from and remote to one another.

Fig. 9B shows a system whereby a display 904 comprising the display module is separate from and remote of apparatus 905 comprising the imager module 901 and controller module 902. In such an arrangement, the disparity constraints of the display 904 are communicated over a communication network to the controller module or alternatively, such constraints are pre-stored in a memory of the controller module and an identification of the display is communicated to the controller so that it knows which display disparity constraint to apply in the selection of a stereoscopic imaging viewpoint pair process. The apparatus 905, having selected an appropriate imaging viewpoint pair given the disparity ranges from the stereoscopic viewpoint pairs and disparity constraints of the display 904 can then transmit stereoscopic content derived from the selected imaging viewpoint pair to the display 904. Such a system is able to select a stereoscopic viewpoint pair, and the stereoscopic content derived therefrom, depending on the object scene perceived from the imaging viewpoints. Accordingly, the system can adapt when the perceived object scene changes, i.e. the by the imaging viewpoints zooming in/out thereby altering their respective field's of view, or objects in the scene moving thereby altering the minimum and maximum object ranges. An optimal stereoscopic viewpoint pair, and stereoscopic content derived therefrom, can be selected that takes into account such alterations.

Fig. 9C shows a system whereby both the controller module 902 and the display module 903 are housed in an apparatus 906 separate from and remote of an apparatus 907 comprising the imager module. In such an arrangement, the indication of a disparity range of an object scene from each of two or more stereoscopic imaging viewpoint pairs of the apparatus 907 could be communicated over a communication network to the apparatus 906. Following receipt of this, the apparatus 905 could select an appropriate imaging viewpoint pair that meets the disparity constraints of the display module 903. Then, the controller module could request stereoscopic content that is derived from the selected imaging viewpoint pair.

Alternatively, prior to making a selection of which viewpoint pair optimally matches the disparity capabilities of the display module 903, the controller module 902 could receive stereoscopic content derived from at least two stereoscopic imaging viewpoint pairs along with indications of the disparity range of the stereoscopic imaging pair from which each stereoscopic content is derived. Thus, the controller module 903 could select an optimal stereoscopic imaging viewpoint pair, and then chose the received stereoscopic content which corresponds to that derived from the selected stereoscopic imaging viewpoint pair. Advantageously, in this scenario, advance knowledge of the display device's disparity capabilities is not required prior to capturing, generating and receiving the stereoscopic content.

Fig. 9D shows a system whereby each of the imager module, controller module and display module is separate from and remote of one another. In such an arrangement data, such as relating to disparities and stereoscopic content, can be transmitted from one module to another over a communication network.

As with the system of Fig. 9C, the apparatus 200, comprising the controller module 902, could receive stereoscopic content derived from at least two stereoscopic imaging viewpoint pairs along with indications of the disparity range of the stereoscopic imaging viewpoint pair from which each stereoscopic content is derived. Again, advantageously, in this scenario, advance knowledge of the display device's disparity capabilities is not required prior to capturing, generating and receiving the stereoscopic content. Such a system is able to select a stereoscopic viewpoint pair, and the stereoscopic content derived therefrom, depending on the display device 904 used. Accordingly, the system can adapt to different display devices, such as for example, a display on a handheld portable electronic device, a conventional panel display or a projection based display, and the stereoscopic content chosen would be optimally suited for the display used.

It will be appreciated that in the above examples, the transmission of stereoscopic content need not be from an actual imaging module 901 itself, but could be from, for example, a stereoscopic content server (not shown). The server could comprise a database with pre-stored stereoscopic content derived from stereoscopic viewpoint pairs along with indications of the disparity range from the stereoscopic imaging viewpoint pairs from which the stereoscopic content is derived.

The transmission of data, for example such as indications of disparity ranges or stereoscopic content, may be via any suitable delivery mechanism. The delivery mechanism may be, for example, an internal data bus, computer-readable storage medium, a computer program product, a memory device, a record medium such as a compact disk read only memory or digital versatile disk, an article of manufacture that tangibly embodies the data. The delivery mechanism may be a signal configured to reliably transfer the data. Such a signal may be transmitted via a communication network such as a local area network, wide area network, Internet or a wireless network such as a wireless area network or a telecommunications network.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The blocks illustrated in the Figs 1, 6 and 8 may represent steps in a method and/or sections of code in the computer program 204. The illustration of a particular order to the blocks does not necessarily imply that there is a required or preferred order for the blocks and the order and arrangement of the block may be varied. Furthermore, it may be possible for some steps to be omitted.

Although various embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

**Claims**

1.　A method comprising:

receiving, at an apparatus (200, 902), an indication of a disparity range ($SIP_nD$) of an object scene from each of two or more stereoscopic imaging viewpoint pairs ($SIVP_n$), wherein the disparity range of the object scene relates to a difference in disparities ($SIP_nD_{max}$ - $SIP_nD_{min}$) of a closest object (502) and a furthest object (501) in the object scene;

receiving an indication of a disparity constraint (SDD) of a stereoscopic display (904), wherein the indication of the disparity constraint of the stereoscopic display comprises an indication of a maximum disparity range of the stereoscopic display;

selecting, at the apparatus (200, 902), a stereoscopic imaging viewpoint pair ($SIVP_x$) whose disparity range is the largest and whose disparity range is less than the maximum disparity range of the stereoscopic display; and

following selection of the selected stereoscopic imaging viewpoint pair ($SIVP_x$), receiving, at the apparatus (200, 902), at least one image captured from each imaging viewpoint ($IV_1$, $IV_2$) of the selected stereoscopic imaging viewpoint pair ($SIVP_x$).

2. A method as claimed in claim 1, further comprising:

   receiving an indication of a second disparity range of a second object scene from each of the two or more stereoscopic imaging viewpoint pairs ($SIVP_n$), wherein the second object scene corresponds to a change in the object scene;
   selecting a further stereoscopic imaging viewpoint pair whose second disparity range is the largest and whose disparity range satisfies the stereoscopic display's disparity constraint (SDD).

3. A method as claimed in any previous claim, further comprising one or more of:

   capturing an image from each imaging viewpoint ($IV_1$, $IV_2$) of the selected stereoscopic imaging viewpoint pair ($SIVP_x$); and
   storing an image captured, or video output, from each imaging viewpoint ($IV_1$, $IV_2$) of the selected stereoscopic imaging viewpoint pair ($SIVP_x$).

4. A method as claimed in any previous claim, further comprising:

   generating stereoscopic content derived from images captured from each imaging viewpoint ($IV_1$, $IV_2$) of the selected stereoscopic imaging viewpoint pair ($SIVP_x$); and/or
   transmitting stereoscopic content derived from images captured from each imaging viewpoint ($IV_1$, $IV_2$) of the selected stereoscopic imaging viewpoint pair ($SIVP_x$).

5. A method as claimed in any previous claim, further comprising:

   receiving stereoscopic content derived from images captured from each imaging viewpoint ($IV_1$, $IV_2$) of the selected stereoscopic imaging viewpoint pair ($SIVP_x$).

6. A method as claimed in any previous claim, further comprising:

   displaying, on the stereoscopic display (904), stereoscopic content derived from images captured from each imaging viewpoint ($IV_1$, $IV_2$) of the selected stereoscopic imaging viewpoint pair ($SIVP_x$).

7. A method as claimed in any previous claim, wherein the indication of the disparity range ($SIP_nD$) of the object scene from each of two or more stereoscopic imaging viewpoint pairs ($SIP_n$) comprises an indication of a maximum disparity range of the object scene from each of the two or more stereoscopic imaging viewpoint pairs.

8. A method as claimed in previous claim 7, wherein the indication of the maximum disparity range of the object scene from each of two or more stereoscopic imaging viewpoint pairs comprises an indication of a measure of a difference between a maximum imaged disparity value ($SIP_nD_{max}$) and a minimum imaged disparity value ($SIP_nD_{min}$) of the object scene from each of two or more stereoscopic imaging viewpoint pairs ($SIP_n$), wherein:

   the maximum imaged disparity value is a measure of a difference between:

   a position in an image, captured by an imaging device (701) located at one of the imaging viewpoints ($IV_1$) of the stereoscopic imaging viewpoint pair, that represents a closest object (502) in the object scene and
   a position in an image, captured by an imaging device (702) located at the other imaging viewpoint ($IV_2$) of the stereoscopic imaging viewpoint pair, that represents the closest object in the object scene;

   the minimum imaged disparity value is a measure of a difference between:

   a position in an image, captured by the imaging device located at one of the imaging viewpoints of the stereoscopic imaging viewpoint pair, that represents a furthest object (501) in the object scene and
   a position in an image, captured by the imaging device located at the other imaging viewpoint of the stereoscopic imaging viewpoint pair, that represents the furthest object in the object scene.

9. A method as claimed in any previous claim, wherein the indication of the disparity constraint (SDD) of the stereoscopic display (904) comprises an indication of a maximum disparity range of the stereoscopic display scaled by a scaling factor, and wherein selecting the stereoscopic imaging viewpoint pair whose disparity range satisfies the disparity constraint of the stereoscopic display comprises selecting the stereoscopic imaging viewpoint pair whose disparity range is less than the scaled maximum disparity range of the stereoscopic display.

10. An apparatus (200, 902) comprising means configured to cause the performance of the method of any of claims 1 to 9.

11. A portable handheld device (700), a user equipment device or a server comprising the apparatus (200) of claim 10.

12. A computer program (204) that, when run on a computer (200), causes the performance of the method of any of claims 1 to 9.

13. A computer readable storage medium (201) encoded with instructions (202) that, when executed by a processor (203), performs the method of any of claims 1 to 9.

**Patentansprüche**

1. Verfahren, umfassend:

Empfangen einer Angabe eines Disparitätsbereichs ($SIP_nD$) einer Objektszene von jedem von zwei oder mehr Blickpunktpaaren in der stereoskopischen Bildgebung ($SIVP_n$) an einer Vorrichtung (200, 902), wobei der Disparitätsbereich der Objektszene einen Unterschied in den Disparitäten ($SIP_nD_{max}$ - $SIP_nD_{min}$) eines nächstgelegenen Objekts (502) und eines am weitesten entfernten Objekts (501) in der Objektszene betrifft;
Empfangen einer Angabe einer Disparitätsbedingung (SDD) eines stereoskopischen Displays (904), wobei die Angabe der Disparitätsbedingung des stereoskopischen Displays eine Angabe eines maximalen Disparitätsbereichs des stereoskopischen Displays umfasst;
Auswählen eines Blickpunktpaares in der stereoskopischen Bildgebung ($SIVP_x$), dessen Disparitätsbereich der größte ist, und dessen Disparitätsbereich unter dem maximalen Disparitätsbereich des stereoskopischen Displays liegt, an der Vorrichtung (200, 902); und
Empfangen mindestens eines Bildes, das von jedem Bildgebungsblickpunkt ($IV_1$, $IV_2$) des ausgewählten Blickpunktpaares in der stereoskopischen Bildgebung ($SIVP_x$) erfasst wurde, an der Vorrichtung (200, 902) nach der Auswahl des ausgewählten Blickpunktpaares in der stereoskopische Bildgebung ($SIVP_x$).

2. Verfahren nach Anspruch 1, ferner umfassend:

Empfangen einer Angabe eines zweiten Disparitätsbereichs einer zweiten Objektszene von jedem der zwei oder mehr Blickpunktpaare in der stereoskopischen Bildgebung ($SIVP_n$), wobei die zweite Objektszene einer Änderung in der Objektszene entspricht;
Auswählen eines weiteren Blickpunktpaares in der stereoskopischen Bildgebung, dessen zweiter Disparitätsbereich der größte ist und dessen Disparitätsbereich die Disparitätsbedingung des stereoskopischen Displays (SDD) erfüllt.

3. Verfahren nach einem der vorhergehenden Ansprüche, ferner umfassend ein oder mehrere von:

Erfassen eines Bildes von jedem Bildgebungsblickpunkt ($IV_1$, $IV_2$) des ausgewählten Blickpunktpaares in der stereoskopischen Bildgebung ($SIVP_x$) ; und
Speichern eines erfassten Bildes oder einer erfassten Videoausgabe von jedem Bildgebungsblickpunkt ($IV_1$, $IV_2$) des ausgewählten Blickpunktpaares in der stereoskopischen Bildgebung ($SIVP_x$).

4. Verfahren nach einem der vorhergehenden Ansprüche, ferner umfassend:

Generieren von stereoskopischem Inhalt, der von Bildern abgeleitet ist, die von jedem Bildgebungsblickpunkt ($IV_1$, $IV_2$) des ausgewählten Blickpunktpaares in der stereoskopischen Bildgebung ($SIVP_x$) erfasst wurden; und/oder
Übertragen von stereoskopischem Inhalt, der von Bildern abgeleitet ist, die von jedem Bildgebungsblickpunkt ($IV_1$, $IV_2$) des ausgewählten Blickpunktpaares in der stereoskopischen Bildgebung ($SIVP_x$) erfasst wurden.

5. Verfahren nach einem der vorhergehenden Ansprüche, ferner umfassend:

Empfangen von stereoskopischem Inhalt, der von Bildern abgeleitet ist, die von jedem Bildgebungsblickpunkt ($IV_1$, $IV_2$) des ausgewählten Blickpunktpaares in der stereoskopischen Bildgebung ($SIVP_x$) erfasst wurden.

6. Verfahren nach einem der vorhergehenden Ansprüche, ferner umfassend:

   Anzeigen von stereoskopischem Inhalt, der von Bildern abgeleitet ist, die von jedem Bildgebungsblickpunkt ($IV_1$, $IV_2$) des ausgewählten Blickpunktpaares in der stereoskopischen Bildgebung ($SIVP_x$) erfasst wurden, auf dem stereoskopischen Display (904).

7. Verfahren nach einem der vorhergehenden Ansprüche, wobei die Angabe des Disparitätsbereichs ($SIP_nD$) der Objektszene von jedem der zwei oder mehr Blickpunktpaare in der stereoskopischen Bildgebung ($SIP_n$) eine Angabe eines maximalen Disparitätsbereichs der Objektszene von jedem der zwei oder mehr Blickpunktpaare in der stereoskopischen Bildgebung umfasst.

8. Verfahren nach dem vorhergehenden Anspruch 7, wobei die Angabe des maximalen Disparitätsbereichs der Objektszene von jedem der zwei oder mehr Blickpunktpaare in der stereoskopischen Bildgebung eine Angabe eines Maßes einer Differenz zwischen einem maximalen abgebildeten Disparitätswert ($SIP_nD_{max}$) und einem minimalen abgebildeten Disparitätswert ($SIP_nD_{min}$) der Objektszene von jedem der zwei oder mehr Blickpunktpaare in der stereoskopischen Bildgebung ($SIP_n$) umfasst, wobei:

   der maximale abgebildete Disparitätswert ein Maß einer Differenz zwischen folgenden ist:

      einer Position in einem Bild, die durch eine Bildgebungseinrichtung (701) erfasst wurde, die sich an einem der Bildgebungsblickpunkte ($IV_1$) des Blickpunktpaares in der stereoskopischen Bildgebung befindet, welches ein nächstgelegenes Objekt (502) in der Objektszene repräsentiert, und
      einer Position in einem Bild, die durch eine Bildgebungseinrichtung (702) erfasst wurde, die sich an dem anderen Bildgebungsblickpunkt ($IV_2$) des Blickpunktpaares in der stereoskopischen Bildgebung befindet, welches das nächstgelegene Objekt in der Objektszene repräsentiert;

   der minimale abgebildete Disparitätswert ein Maß einer Differenz zwischen folgenden ist:

      einer Position in einem Bild, die durch die Bildgebungseinrichtung erfasst wurde, die sich an einem der Bildgebungsblickpunkte des Blickpunktpaares in der stereoskopischen Bildgebung befindet, welches ein am weitesten entferntes Objekt (501) in der Objektszene repräsentiert, und
      einer Position in einem Bild, das durch das Bildgebungsgerät erfasst wurde, die sich an dem anderen Bildgebungsblickpunkt des Blickpunktpaares in der stereoskopischen Bildgebung befindet, welches das am weitesten entfernte Objekt in der Objektszene repräsentiert.

9. Verfahren nach einem der vorhergehenden Ansprüche, wobei die Angabe der Disparitätsbedingung (SDD) des stereoskopischen Displays (904) eine Angabe eines maximalen Disparitätsbereichs des stereoskopischen Displays umfasst, der um einen Skalierungsfaktor skaliert ist, und wobei Auswählen des Blickpunktpaares in der stereoskopischen Bildgebung, dessen Disparitätsbereich die Disparitätsbedingung des stereoskopische Displays erfüllt, Auswählen des Blickpunktpaares in der stereoskopischen Bildgebung umfasst, dessen Disparitätsbereich kleiner als der skalierte maximale Disparitätsbereich des stereoskopische Displays ist.

10. Vorrichtung (200, 902), umfassend Mittel, die konfiguriert sind, um die Durchführung des Verfahrens gemäß einem der Ansprüche 1 bis 9 herbeizuführen.

11. Tragbares Handgerät (700), ein Anwenderausstattungsgerät oder Server, umfassend die Vorrichtung (200) nach Anspruch 10.

12. Computerprogramm (204), das, wenn es auf einem Computer (200) ausgeführt wird, die Durchführung des Verfahrens gemäß einem der Ansprüche 1 bis 9 herbeiführt.

13. Computerlesbares Speichermedium (201), das mit Anweisungen (202) kodiert ist, die bei Ausführung durch einen Prozessor (203) das Verfahren gemäß einem der Ansprüche 1 bis 9 durchführen.

**Revendications**

1. Procédé comprenant :

   la réception, au niveau d'un appareil (200, 902), d'une indication d'une gamme de disparité ($SIP_nD$) d'une scène d'objets depuis chacune d'au moins deux paires de points de vue d'imagerie stéréoscopique ($SIVP_n$), la gamme de disparité de la scène d'objets étant liée à une différence de disparités ($SIP_nD_{max}$ - $SIP_nD_{min}$) d'un objet le plus proche (502) et d'un objet le plus éloigné (501) dans la scène d'objets ;
   la réception d'une indication d'une contrainte de disparité (SDD) d'un écran stéréoscopique (904), l'indication de la contrainte de disparité de l'écran stéréoscopique comprenant une indication d'une gamme de disparité maximale de l'écran stéréoscopique ;
   la sélection, au niveau de l'appareil (200, 902), d'une paire de points de vue d'imagerie stéréoscopique ($SIVP_x$) dont la gamme de disparité est la plus grande et dont la gamme de disparité est inférieure à la gamme de disparité maximale de l'écran stéréoscopique ; et
   après la sélection de la paire de points de vue d'imagerie stéréoscopique sélectionnée ($SIVP_x$), la réception, au niveau de l'appareil (200, 902), d'au moins une image capturée depuis chaque point de vue d'imagerie ($IV_1$, $IV_2$) de la paire de points de vue d'imagerie stéréoscopique sélectionnée ($SIVP_x$).

2. Procédé selon la revendication 1, comprenant en outre :

   la réception d'une indication d'une deuxième gamme de disparité d'une deuxième scène d'objets depuis chacune des au moins deux paires de points de vue d'imagerie stéréoscopique ($SIVP_n$), la deuxième scène d'objets correspondant à un changement dans la scène d'objets ;
   la sélection d'une autre paire de points de vue d'imagerie stéréoscopique dont la deuxième gamme de disparité est la plus grande et dont la gamme de disparité satisfait la contrainte de disparité de l'écran stéréoscopique (SDD).

3. Procédé selon une quelconque revendication précédente, comprenant en outre une ou plusieurs des étapes suivantes :

   la capture d'une image depuis chaque point de vue d'imagerie ($IV_1$, $IV_2$) de la paire de points de vue d'imagerie stéréoscopique sélectionnée ($SIVP_x$) ; et
   le stockage d'une image capturée à partir, ou d'une sortie vidéo, de chaque point de vue d'imagerie ($IV_1$, $IV_2$) de la paire de points de vue d'imagerie stéréoscopique sélectionnée ($SIVP_x$).

4. Procédé selon une quelconque revendication précédente, comprenant en outre :

   la génération d'un contenu stéréoscopique dérivé d'images capturées depuis chaque point de vue d'imagerie ($IV_1$, $IV_2$) de la paire de points de vue d'imagerie stéréoscopique sélectionnée ($SIVP_x$) ; et/ou
   la transmission d'un contenu stéréoscopique dérivé d'images capturées depuis chaque point de vue d'imagerie ($IV_1$, $IV_2$) de la paire de points de vue d'imagerie stéréoscopique sélectionnée ($SIVP_x$).

5. Procédé selon une quelconque revendication précédente, comprenant en outre :

   la réception d'un contenu stéréoscopique dérivé d'images capturées depuis chaque point de vue d'imagerie ($IV_1$, $IV_2$) de la paire de points de vue d'imagerie stéréoscopique sélectionnée ($SIVP_x$).

6. Procédé selon une quelconque revendication précédente, comprenant en outre :

   l'affichage, sur l'écran stéréoscopique (904), d'un contenu stéréoscopique dérivé d'images capturées depuis chaque point de vue d'imagerie ($IV_1$, $IV_2$) de la paire de points de vue d'imagerie stéréoscopique sélectionnée ($SIVP_x$).

7. Procédé selon une quelconque revendication précédente, dans lequel l'indication de la gamme de disparité ($SIP_nD$) de la scène d'objets depuis chacune d'au moins deux paires de points de vue d'imagerie stéréoscopique ($SIP_n$) comprend une indication d'une gamme de disparité maximale de la scène d'objet depuis chacune des au moins deux paires de points de vue d'imagerie stéréoscopique.

**8.** Procédé selon la revendication 7 précédente, dans lequel l'indication de la gamme de disparité maximale de la scène d'objets depuis chacune d'au moins deux paires de points de vue d'imagerie stéréoscopique comprend une indication d'une mesure d'une différence entre une valeur de disparité imagée maximale ($SIP_nD_{max}$) est une valeur de disparité imagée minimale ($SIP_nD_{min}$) de la scène d'objets depuis chacune d'au moins deux paires de points de vue d'imagerie stéréoscopique ($SIP_n$), dans lequel :

la valeur de disparité imagée maximale est une mesure d'une différence entre :

une position dans une image, capturée par un dispositif d'imagerie (701) situé à un des points de vue d'imagerie ($IV_1$) de la paire de points de vue d'imagerie stéréoscopique, qui représente un objet le plus proche (502) dans la scène d'objets et
une position dans une image, capturée par un dispositif d'imagerie (702) situé à l'autre point de vue d'imagerie ($IV_2$) de la paire de points de vue d'imagerie stéréoscopique, qui représente l'objet le plus proche dans la scène d'objets ;

la valeur de disparité imagée minimale est une mesure d'une différence entre :

une position dans une image, capturée par le dispositif d'imagerie situé à un des points de vue d'imagerie de la paire de points de vue d'imagerie stéréoscopique, qui représente un objet le plus éloigné (501) dans la scène d'objets et
une position dans une image, capturée par le dispositif d'imagerie situé à l'autre point de vue d'imagerie de la paire de points de vue d'imagerie stéréoscopique, qui représente l'objet le plus éloigné dans la scène d'objets.

**9.** Procédé selon une quelconque revendication précédente, dans lequel l'indication de la contrainte de disparité (SDD) de l'écran stéréoscopique (904) comprend une indication d'une gamme de disparité maximale de l'écran stéréoscopique réduite par un facteur d'échelle, et dans lequel la sélection de la paire de points de vue d'imagerie stéréoscopique dont la gamme de disparité satisfait la contrainte de disparité de l'écran stéréoscopique comprend la sélection de la paire de points de vue d'imagerie stéréoscopique dont la gamme de disparité est inférieure à la gamme de disparité maximale réduite de l'écran stéréoscopique.

**10.** Appareil (200, 902) comprenant des moyens configurés pour provoquer la mise en oeuvre du procédé de l'une quelconque des revendications 1 à 9.

**11.** Dispositif portable à main (700), dispositif d'équipement utilisateur ou serveur comprenant l'appareil (200) de la revendication 10.

**12.** Programme informatique (204) qui, lorsqu'il est exécuté sur un ordinateur (200), provoque la mise en oeuvre du procédé de l'une quelconque des revendications 1 à 9.

**13.** Support de stockage lisible par ordinateur (201) codé avec des instructions (202) qui, lorsqu'elles sont exécutées par un processeur (203), mettent en oeuvre le procédé de l'une quelconque des revendications 1 à 9.

Receive disparity range of scene
from each viewpoint pair — 101

Receive disparity constraint of
display — 102

Select viewpoint pair having:
    largest disparity range and
    whose disparity range satisfies display's
    disparity constraint — 103

FIG. 1

FIG. 2

301
SIVP$_1$

302
SIVP$_2$

308

303 IV$_1$

IV$_2$ 304

IV$_3$ 305

SIVP$_1$SD

SIVP$_2$SD

306

307

FIG. 3

SIVP$_3$

400

SIVP$_1$

SIVP$_2$

303 IV$_1$

IV$_2$

IV$_3$ 401

SIVP$_1$SD

SIVP$_2$SD

SIVP$_3$SD

402

FIG. 4

Furthest object
distance

503 ⌇ 504

502

Closest object
distance

304

506 303 IV₁ IV₂ 507 308

SIVP₁SD/2

FIG. 5A

510

SIVP₁D$_{max}$/2

Image from IV₁

508
501

502

509
SIVP₁D$_{min}$/2

FIG. 5B

513

SIVP₂D$_{max}$/2

Image from IV₂

511

502

501

512
SIVP₁D$_{min}$/2

FIG. 5C

102    601    602    603

| SDD | SIVP$_1$D | SIVP$_2$D | ··· | SIVP$_n$D |

Select a SIVP$_X$    103

Capture image from each viewpoint of selected SIVP$_X$    604

Perform image processing algorithm    605

Display stereoscopic content on display    607

Generate stereoscopic content from captured images    606

FIG. 6

FIG. 7

800

802

Receive images
captured from
selected SIVP$_x$

606

Generate stereoscopic
content derived from
images captured from
selected SIVP$_x$

801

Store images
from selected
SIVP$_x$

803

Transmit stereoscopic
content derived from
images captured from
selected SIVP$_x$

604

Capture images
from selected
SIVP$_x$

Select SIVP$_x$

103

804

Receive stereoscopic
content derived from
images captured from
selected SIVP$_x$

607

Display
stereoscopic
content derived
from images
captured from
selected SIVP$_x$

FIG. 8

700

901    903

902

FIG. 9A

901    905

902    904

FIG. 9B

907    902    903

906

FIG. 9C

907    200    904

FIG. 9D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008172342 A
- US 20090142041 A1
- EP 2315452 A2